# EUROPEAN PATENT SPECIFICATION

(11) **EP 2 725 909 B1**
(45) Date of publication and mention of the grant of the patent: **10.06.2015**
(21) Application number: 12725164.3
(22) Date of filing: 16.05.2012
(51) Int. Cl.: A21D 13/00, A21B 2/00, A23L 1/01, A21B 1/24

(54) **A METHOD OF PREPARING A FULLY COOKED FARINACEOUS PRODUCT**
VERFAHREN ZUR HERSTELLUNG EINES VOLLSTÄNDIG GEKOCHTEN MEHLHALTIGEN PRODUKTS
PROCÉDÉ DE PRÉPARATION D'UN PRODUIT FARINEUX ENTIÈREMENT CUIT

(30) Priority: 30.06.2011 EP 11172197
(43) Date of publication of application: 07.05.2014
(73) Proprietor: Bakery Supplies Europe Holding B.V., 1112 XE Diemen (NL)
(72) Inventor: CLARKE, Stephen John, Buckley North Wales CH7 2AS (GB); MORET, Pieter, NL-4421 ML Kapelle (NL); HEUBERGER, Kai Alexander, 27574 Bremerhaven (DE)
(74) Representative: Nederlandsch Octrooibureau
(86) International application number: PCT/NL2012/050343
(87) International publication number: WO 2013/002634

(56) References cited:
- WO-A1-2010/137982
- WO-A1-2011/025370

## Description

### TECHNICAL BACKGROUND OF THE INVENTION

The present invention relates to a method of preparing a fully cooked farinaceous product, notably a fully cooked farinaceous product comprising a browned crust. More particularly, the invention provides a method of preparing a fully cooked farinaceous food product such as a doughnut, said method comprising:
- preparing a farinaceous dough or batter;
- dividing the dough or batter into one or more portions;
- prefrying said one or more portions; and
- cooking said one or more prefried portions by exposing them (i) to impingement with hot air and (ii) to infrared radiation, wherein the exposure to the impingement with hot air and the infrared radiation can occur simultaneously, sequentially or in any combinations thereof

### BACKGROUND OF THE INVENTION

It is well-established that fully cooked farinaceous products can be prepared using very different types of heat treatment, including oven baking, frying, infrared radiation, hot air impingement, superheated steam etc. Each of these heating techniques has its advantages and its drawbacks.

The preparation of fully cooked farinaceous products by means of frying yields fried products having a browned, crispy crust. Furthermore, fried products have a very distinct pleasant taste that is not found in fully cooked farinaceous products that have been prepared by means of other heating techniques. Doughnuts are a typical example of a fried farinaceous product.

An important drawback of fried farinaceous products resides in the high fat content of these products and the fact that these fats usually contain high levels of saturated fatty acids. Thus, from a nutritional perspective it is highly desirable to reduce the fat levels in these fried farinaceous products. This problem is well recognized in the prior art. Hence, it is not surprising that the prior art provides a variety of alternative heat treatment techniques that aim to yield fully cooked farinaceous products that are indistinguishable from fried products, except for the fact that they contain significantly less fat.

GB-A 2 359 975 describes a method of manufacturing a doughnut, comprising spraying a proven dough mixture with cooking fat and baking step. The fat content of doughnuts manufactured by this method is reduced comparison to fried doughnuts.

WO 2010/057299 describes a process for preparing a lower fat food product such as a doughnut, said process comprising the steps of: (i) frying the food product to begin cooking, and (ii) subjecting the food product to a baking step to complete the cooking.

WO 2010/137982 describes a method of preparing a fully cooked farinaceous food product, said method comprising the successive steps of:
- preparing a farinaceous dough or batter by mixing flour, water and optionally one or more other bakery ingredients;
- dividing the dough or batter into one or more portions; and
- cooking said one or more portions by exposing them (i) for in total 20-600 seconds to infrared radiation, more than 50% of the energy content of said infrared radiation stemming from infrared radiation having a wavelength in the range of 0.7-10 µm and (ii) for in total 20-600 seconds to impingement with hot air having a temperature of at least 150 °C, wherein the exposure to the infrared radiation and the impingement with hot air can occur simultaneously, sequentially or in any combinations thereof; and
wherein a fat-containing coating composition is applied onto the surface of the portions prior to, during or after the cooking of the portions, the fat being selected from triglycerides, diglycerides, monoglycerides, phospholipids and combinations thereof.

WO 2011/025370 describes a method of preparing a ready-to-eat farinaceous food product, said method comprising the successive steps of:
- preparing a farinaceous dough by mixing flour, water and optionally one or more other bakery ingredients;
- dividing the dough into one or more dough portions;
- shaping the one or more dough portions into one or more shaped dough pieces; d) contacting 30-70% of the total surface area of the one or more shaped dough pieces with hot oil during a period of at least 10 seconds to produce one or more partially fried dough pieces comprising a fried surface area and a non- fried surface area; and
- baking said one or more partially fried dough pieces to produce one or more baked dough pieces;
wherein a layer of edible material is applied to 40-70% of the surface area of the shaped dough pieces, the partially fried dough pieces or the baked dough pieces and wherein the surface area of the final ready-to-eat product that is not covered by the layer of edible material is fried surface area.

### SUMMARY OF THE INVENTION

The inventors have designed a method for the preparation of fully cooked farinaceous food products having a reduced fat content. The reduced fat products obtained by the present process closely resemble their full-fat counterparts and in terms of taste, texture and appearance they are superior to the reduced fat products disclosed in the prior art.

The method according to the present invention comprises the successive steps of:
- preparing a farinaceous dough or batter by mixing flour, water, leavening agent and optionally one or more other bakery ingredients;
- dividing the dough or batter into one or more portions;
- prefrying said one or more portions;
- cooking the one or more prefried portions by exposing them (i) to impingement with hot air, and (ii) to infrared radiation, wherein the exposure to the impingement with hot air and the infrared radiation can occur simultaneously, sequentially or in any combinations thereof.

The method of the present invention employs 3 different heating techniques, i.e. frying, hot air impingement and IR heating. The specific heating conditions employed in the method are as follows:
- prefrying by contacting the one or more portions for 2-40 seconds with hot oil having a temperature of 150-250°C;
- cooking the prefried portions by exposure to (i) in total 20-600 seconds of infrared radiation and (ii) at least 1 second and less than 20 seconds of impingement with hot air having a temperature of at least 150 °C.

The pre-frying comprises:(i) contacting the complete outer surface of the one or more portions with the hot oil; or (ii) contacting one side of the one or more portions with the hot oil, followed by the application of oil to the part of the pre-fried portions that has not been contacted with the hot oil before the cooking of said prefried portions.

### DETAILED DESCRIPTION OF THE INVENTION

Accordingly, one aspect of the invention relates to a method of preparing a fully cooked farinaceous food product, said method comprising the successive steps of:
A. preparing a farinaceous dough or batter by mixing flour, water, leavening agent and optionally one or more other bakery ingredients;
B. dividing the dough or batter into one or more portions;
C. prefrying said one or more portions by contacting them for 2-40 seconds with hot oil having a temperature of 150-250°C;
D. cooking said one or more prefried portions by exposing them (i) for in total at least 1 second and less than 20 seconds to impingement with hot air having a temperature of at least 150 °C and (ii) for in total 20-600 seconds to infrared radiation, more than 50% of the energy content of said infrared radiation stemming from infrared radiation having a wavelength in the range of 0.7-10 µm, wherein the exposure to the impingement with hot air and the infrared radiation can occur simultaneously sequentially or in any combinations thereof.
wherein the pre-frying comprises:(i) contacting the complete outer surface of the one or more portions with the hot oil; or (ii) contacting one side of the one or more portions with the hot oil, followed by the application of oil to the part of the pre-fried portions that has not been contacted with the hot oil before the cooking of said prefried portions.

The term "oil" as used herein refers to triglycerides, diglycerides, monoglycerides and phospholipids. The oil can be solid or liquid at ambient temperature.

The time period during which a portion is contacted with the hot oil is determined by the part of said portion that has been in contact with the hot oil for the longest period of time.

The term "infrared radiation" as used herein refers to electromagnetic radiation having a wavelength of 0.7 µm to 1 mm. Whenever reference is made herein to infrared radiation having a wavelength within a certain range, what is meant is that more than 50%, preferably more than 80% of the energy content of the infrared radiation stems from infrared radiation having a wavelength within said range.

In the present method the exposure to the infrared radiation and the impingement with hot air can occur simultaneously, sequentially or in any combinations thereof. Thus, in step D the present method may, for instance, employ simultaneous exposure to infrared radiation and impingement with hot air followed by exposure to impingement with hot air only.

The term "air" as used in relation to impingement with hot air should not be construed narrowly, as impingement with gases or gas mixtures other than air may produce similar results. Preferably, the hot air employed in the present method contains at least 50 wt.% of air. Most preferably, the hot air employed consists of air.

In the present method portions of dough or batter are formed. These portions can take any shape or form. As regards the size of the portions it is preferred to employ portions of each 10-200 g.

The present method offers the advantage that it enables the preparation of fully cooked farinaceous products having a relatively low fat content. Accordingly, it is preferred to employ a dough or batter that has a relatively low fat content. Preferably, the dough or batter prepared in step A contains less than 10% fat by weight of flour.

The method according to the invention can suitably be used to cook portions of dough or portions of batter. Since batter is usually fluid, portions of batter may be held in a receptacle until the starch has gelatinized to such an extent that the portions have become shape-retaining. It is also possible to introduce batter portions straight into the hot oil without the use of a receptacle, e.g. in case of cake doughnuts.

The present method is particularly suitable for cooking portions of dough. Typically, the dough employed in the present method contains 40-60% of water by weight of flour and 0-50% of other bakery ingredients by weight of flour.

The present method is particularly suitable for cooking portions of dough or batter that have been leavened with the help of yeast and/or a chemical leavening agent prior to and/or during the prefrying. Typically, the leavened portions have a specific volume of at least 1.5-4.5 ml/g, more preferably of 2.0-4.0 ml/g.

Whenever reference is made herein to the specific volume of a farinaceous portion this refers exclusively to the farinaceous part of the portion. In other words, for instance, fillings are to be disregarded when determining the specific volume.

In the present method the contacting of the portion with the hot oil may occur, for instance, by dipping the portions into hot oil, by spraying the portions with hot oil or by partially or completely immersing the portions in hot oil. Preferably, the contacting with hot oil occurs by introducing the portions into a bath of hot oil and especially by allowing the portions to float in such a bath during the prefrying.

The hot oil employed to prepare the prefried portions typically has a temperature of 160-230°C, more preferably a temperature of 170-210°C.

According to another preferred embodiment, the one or more portions are contacted with the hot oil for more than 5 seconds, more preferably for more than 12 seconds, even more preferably for more than 20 seconds and most preferably for more than 22 seconds. Typically, the portions are contacted with the hot oil for not longer than 35 seconds, especially for not longer than 32 seconds.

Typically, the oil that is used for prefrying the portions contains at least 90 wt.% of a lipid selected from triglycerides, sucrose polyesters and combinations thereof. Examples of oils that may be used include vegetable oils such as sunflower oil, rapeseed oil, corn oil and soybean oil.

It is common practice to manufacture fried farinaceous food products such as doughnuts by introducing a raw doughnut into a fryer, allowing the doughnut to float for e.g. 60 seconds and to then flip the doughnut to also fry the other side of the product. The present invention encompasses a process in which the complete outer surface is contacted with the hot oil, e.g. by completely immersing the product into the hot oil or by flipping the product during the frying operation. The invention also encompasses embodiments in which only a part of the outer surface, preferably at least 40% of the outer surface is contacted with the hot oil.

The inventors have found that in the present process it suffices to prefry only one side of the one or more portions. Hence, in accordance with a particularly preferred embodiment, only one side of the one or more portions is contacted with the hot oil during the specified time period. This embodiment can be realised by simply introducing the one or more portions into a bath of hot oil, allowing the portions to float in the oil with the same side up for 2 to 40 seconds and then removing the portions from the oil bath so they may subsequently be cooked by exposure to hot air impingement and infrared radiation.

In the advantageous embodiment in which only one side of the one or more portions is contacted with the hot oil, oil is applied to the part of the prefried portions that has not been contacted with the hot oil before these are cooked. The oil may suitably be applied by spraying, by brushing or by passing the portions through a curtain of falling oil. The application of oil to the part of the portions that has not been contacted with the hot oil also offers the advantage that after the cooking of the prefried portions the crust of the fully cooked product has a uniform appearance and texture.

Thus, unlike WO 2011/025370, in the embodiment in which only one side of the one or more portions is contacted with the hot oil, there is no need to hide colour and/or texture differences by applying a layer of edible material (e.g. chocolate, fruit preparation, custard, glaze, sugar, fat, cocoa, milk protein, egg yolk, egg white and combinations thereof) to cover the surface area that has not been contacted with the hot oil. Accordingly, one advantageous embodiment of the invention relates to a process in which only one side of the one or more portions is contacted with the hot oil during the specified time period, wherein oil is applied to the part of the prefried portions that has not been contacted with the hot oil before these are cooked, and wherein no layer of edible material is applied to cover the surface area that has not been contacted with the hot oil.During the prefrying in the present method the volume of the one or more portions increases with at least 2%, especially at least 3%. Typically, the volume of the one or more portions increases by not more than 40%, especially by not more than 20% during the prefrying.

The prefried portions obtained in the present process typically have a specific volume of 2.5-5.0 ml/g, more preferably 3.0-4.5 ml/g before they are subjected to the cooking by hot air impingement and infrared radiation.

Hot air impingement is employed in the present method to achieve a very intense heat transfer into the portions. Accordingly, the portions are preferably exposed to impingement with hot air having a temperature of 180-340 °C, more preferably of 200-320 °C.

The effectiveness of the impingement with hot air depends on the temperature of the hot air, but also on the flow rate of said hot air. Advantageously, the impingement with hot air comprises impinging the portions with hot air having a velocity of at least 1 m/s, preferably of 5-20 m/s.

In the present method the infrared radiation can suitably be provided by any type of infrared heater that is capable of producing infrared radiation with the right wavelength. The latter wavelength is dependent on the temperature of the emitting body. Most commercially available infrared heaters employ a flame or an electrically heated filament as the emitting body. The present method advantageously employs a infrared heater that contains an electrically heated filament as the emitting body. This filament may be protected by a heat-resistant quartz glass tube. Furthermore, said quartz tube may be filled with inert gas to prevent filament degradation. In the present method the infrared radiation is advantageously provided by infrared tube heaters.

The present method preferably employs infrared radiation having a very high energy content. Consequently, in a particularly preferred embodiment, the infrared radiation employed has a wavelength of 0.7-5.0 µm.

According to another preferred embodiment the portions of dough or batter are exposed to infrared radiation using high power densities. Advantageously, the portions are exposed to a heat flux of at least 2 kW/m², more preferably of at least 5 kW/m² and most preferably of 8-80 kW/m² for at least 20 seconds. Advantageously, the total time period during which the portions are exposed to the aforementioned heat flux is at least 40 seconds, more preferably at least 60 seconds and most preferably at least 90 second. Typically, the time period during which the portions are exposed to the earlier mentioned heat flux does not exceed 500 seconds. Preferably, said time period does not exceed 350 seconds.

In the present method, the cooking conditions not only bring about the formation of browned crust, but they also cause gelatinization of the starch that is contained in the interior of the portions. Typically, in the present method the temperature within the portions increases to at least 80 °C during the cooking in step D. More preferably, the temperature within the portions increases to at least 90 °C, most preferably to at least 92 °C during the cooking in step D.

The fully cooked product that is obtained in the present method immediately after the final heat treatment typically has a core temperature of at least 85 °C, more preferably of at least 90°C and most preferably of 92-99 °C.

The inventors have found that the present method yields a particularly good quality products if the cooking of the prefried portions comprises first subjecting the prefried portions to hot air impingement followed by infrared heating. Accordingly, in a very preferred embodiment of the present method the one or more prefried portions are cooked by:
- partially cooking the prefried portions by subjecting them to impingement with hot air having a temperature of at least 150 °C for at least 1 second and less than 20 seconds; and
- fully cooking the partially cooked portions by exposing them for in total 20-600 seconds, preferably 30-350 seconds to infrared radiation, more than 50% of the energy content of said infrared radiation stemming from infrared radiation having a wavelength in the range of 0.7-10 µm.

Typically, the volume of the prefried portions increases by at least 10%, more preferably by at least 12% during the partial cooking that is achieved by subjecting the portions to impingement with hot air. The volume increase observed during the partial cooking normally does not exceed 50%.

The partially cooked portions obtained after hot air impingement typically have a specific volume of 3.0-6.0 ml/g, most preferably of 3.5-5.5 ml/g.

During the exposure of the partially cooked portions to infrared radiation the temperature within these partially cooked portions typically increases to at least 90°C, more preferably to at least 95 °C.

The fully cooked farinaceous food product produced by the present method typically has a specific volume of 4.0-6.5 ml/g, most preferably of 4.5-6.0 ml/g.

In accordance with a particularly preferred embodiment of the present method a substantial amount of heat transferred into the portions of dough or batter is provided by the exposure to infrared radiation. Preferably, at least 30%, more preferably at least 40% of the heat transfer that occurs within the present method is provided by the infrared radiation. Typically, the infrared radiation accounts for not more than 80% of the total heat transfer that occurs in the present method.

The fully cooked farinaceous product obtained in the present method is preferably selected from the group consisting of: doughnuts, fried noodles, lardy cakes, Spritzkuchen, Krapfen, churros, bu 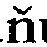 uelos and xuxos. According to a preferred embodiment, the fully cooked farinaceous product is a doughnut, especially a fully cooked doughnut having a fat content of 2-20 wt.%, even more preferably of 2-17 wt.%. Most preferably, the fully cooked farinaceous product is a doughnut having a reduced fat content of 2-15 wt.%.

The invention is further illustrated by means of the following, non-limiting examples.

### EXAMPLES

### Example 1

Ring doughnuts (45 grams) were prepared using the following recipe:

| | Wt.% |
|---|---|
| Flour | 57.6 |
| Water | 27.6 |
| Doughnut concentrate | 8.3 |
| Fat | 3.5 |
| Yeast | 3.0 |

The total fat content of the ring doughnuts prepared according to the above recipe was 7 wt.%. The doughnuts were proofed by placing them in a proofing cabinet for 60 minutes (35 °C, 70% relative humidity).

The proofed doughnuts were pre-fried on one side in a travelling fryer (20 sec. in oil with a temperature of 180°C) and transferred into a travelling infrared oven that had been additionally equipped with hot air impingement nozzles.

The oven consisted of a moving wire mesh belt the speed of which could be controlled. The hot air impingement nozzles were mounted at the front end of the oven both above and below the moving belt. The temperature of the hot air was adjustable. Four sets of infrared heating lamps were mounted above the moving belt and one set below. Each set of infrared heating lamps consisted of 4 lamps that were mounted at such angles that an even colouring of the products was obtained. The intensity of each heating set could be adjusted independently. The sets of lamps were evenly distributed across the length of the moving belt.

An experiment was carried out using the lamp intensities and impingement temperatures depicted in Table I (zone 1 representing the first and zone 5 representing the last zone of the oven that the belt passes through). Average heat flow from the infrared heating lamps in Zone 2 - 5 was 15 kW/m². The average heat transfer coefficient in the hot air impingement section was 120 W/m².°C. Total residence time in the oven was 90 seconds. Residence time in impingement zone 1 was 15 seconds.

**Table I**

| | | | | **Zone 5** | |
|---|---|---|---|---|---|
| **Zone 1 Imp. Temp** | **Zone 2** | **Zone 3** | **Zone 4** | **Top** | **Bottom** |
| 250°C | 90% | 80% | 70% | 60% | 50% |

Upon leaving the oven, the fully cooked doughnuts had a core temperature of about 95 °C. The baking loss observed during the cooking process was around 1 wt.%. The fat content of the fully cooked doughnuts was about 12 wt.%.

In terms of appearance and eating quality the fully cooked doughnuts so obtained were essentially indistinguishable from ordinary fried doughnuts.

### Example 2

Example 1 was repeated except that this time the proofed doughnuts were pre-fried on one side in a travelling fryer (20 sec. in oil with a temperature of 180°C) and while they passed through the travelling fryer they also travelled underneath an oil curtain. Thus, oil was applied to the part of the prefried doughnuts that had not been contacted with hot oil during frying.

It was found that the crust of the fully cooked doughnuts so obtained had a more uniform appearance and texture than the crust of the fully cooked doughnuts obtained in Example 1.

### Example 3

Example 1 was repeated except that this time the proofed doughnuts were sprayed with oil having a temperature of 180°C while they passed through the travelling fryer. Thus, oil was applied to the part of the prefried doughnuts that had not been contacted with hot oil during frying.

It was found that the crust of the fully cooked doughnuts so obtained had a more uniform appearance and texture than the crust of the fully cooked doughnuts obtained in Example 1.

### Example 4

Example 1 was repeated except that this time an oven was used with a different arrangement of the hot impingement nozzles and the infrared heating sets. This time, the set of hot air impingement nozzles was mounted at the end of the oven so that the doughnuts were exposed to the hot air after the infrared heating lamps.

An experiment was carried out using the lamp intensities and impingement temperatures depicted in Table II (zone 1 representing the first and zone 5 representing the last zone of the oven that the belt passes through). Total residence in the oven was 90 seconds. Residence time in impingement zone 5 was 15 seconds.

**Table II**

| | | | **Zone 4** | | |
|---|---|---|---|---|---|
| **Zone 1** | **Zone 2** | **Zone 3** | **Top** | **Bottom** | **Zone 5 Imp. Temp** |
| 90% | 80% | 70% | 60% | 50% | 250°C |

Upon leaving the oven, the fully cooked doughnuts had a core temperature of about 95 °C. The baking loss observed during the cooking process was around 1 wt.%. The fat content of the fully cooked doughnuts was about 12 wt.%.

In terms of eating quality the fully cooked doughnuts so obtained were essentially indistinguishable from ordinary fried doughnuts. The appearance of the doughnuts was slightly inferior to that of the doughnuts of Example 1 in that the doughnuts were less evenly coloured.

### Comparative Example 1

Ring doughnuts (45 grams) were prepared in the same way as described in Examples 1 and 2.

The proofed doughnuts were not prefried and were cooked using a travelling infrared oven as described in Example 1 of WO 2010/137982. This oven consisted of a moving wire mesh belt the speed of which could be controlled. The infrared heating lamps and the hot air impingement nozzles were mounted above the moving belt. Half way along the belt there was a switchback, which effectively flipped the doughnuts. The heating elements consisted of six sets of two lamps mounted at adjustable angles, each set of which could be adjusted in intensity. The sets of lamps were evenly distributed across the length of the moving belt. In addition two hot air impingement nozzles were mounted, one near the centre of the belt and one near the end, so that each side of the doughnuts was exposed to the hot air directly. The temperature of the hot air was adjustable.

A number of experiments were carried out using the lamp intensities and impingement temperatures depicted in Table III (zone 1 representing the first and zone 8 representing the last zone of the oven that the belt passes through). In all experiments the residence time within the oven was 3 minutes. The raw doughnuts were sprayed with oil before entering the oven. Approximately 1.6 g grams of oil were deposited on each raw doughnut.

**Table III**

| **Zone 1** | **Zone 2** | **Zone 3** | **Zone 4 Imp. Temp** | **Zone 5** | **Zone 6** | **Zone 7** | **Zone 8 Imp. Temp** |
|---|---|---|---|---|---|---|---|
| 80% | 25% | 20% | 250 °C | 60% | 25% | 20% | 300 °C |

Upon leaving the oven, the fully cooked doughnuts had a core temperature of about 95 °C. The baking loss observed during the cooking process was around 8 wt.%. The fat content of the fully cooked doughnuts was about 9 wt.%.

The doughnuts so obtained were less well shaped and also not as soft to eat as the doughnuts of Examples 1 and 2.

## Claims

1. A method of preparing a fully cooked farinaceous food product, said method comprising the successive steps of:
A. preparing a farinaceous dough or batter by mixing flour, water, leavening agent and optionally one or more other bakery ingredients;
B. dividing the dough or batter into one or more portions;
C. prefrying said one or more portions by contacting them for 2-40 seconds with hot oil-having a temperature of 150-250°C;
D. cooking said one or more prefried portions by exposing them (i) for in total at least 1 second and less than 20 seconds to impingement with hot air having a temperature of at least 150 °C, and (ii) for in total 20-600 seconds to infrared radiation, more than 50% of the energy content of said infrared radiation stemming from infrared radiation having a wavelength in the range of 0.7-10 µm, wherein the exposure to the impingement with hot air and the infrared radiation can occur simultaneously, sequentially or in any combinations thereof; wherein the prefrying comprises:
(i) contacting the complete outer surface of the one or more portions with the hot oil; or
(ii) contacting one side of the of the one or more portions with the hot oil, followed by the application of oil to the part of the prefried portions that has not been contacted with the hot oil;
before the cooking of said prefried portions.

2. Method according to claim 1, wherein the hot oil has a temperature of 160-230°C.

3. Method according to claim 1 or 2, wherein the one or more portions are contacted with the hot oil for at least 20 seconds.

4. Method according to any one of the preceding claims, wherein the prefried portions have a specific volume of 3.0-4.5 ml/g.

5. Method according to any one of the preceding claims, wherein the prefried portions are exposed to impingement with hot air having a temperature of 180-340 °C, preferably of 200-320 °C.

6. Method according to any one of the preceding claims, wherein the impingement with hot air comprises impinging the prefried portions with hot air having a velocity of at least 1 m/s, preferably of 5-20 m/s.

7. Method according to any one of the preceding claims, wherein the infrared radiation is provided by infrared tube heaters.

8. Method according to any one of the preceding claims, wherein the infrared radiation has a wavelength of 0.7-5.0 µm.

9. Method according to any one of the preceding claims, wherein at least 30%, more preferably at least 40% of the heat transfer that occurs within the present method is provided by the infrared radiation.

10. Method according to any one of the preceding claims, wherein the one or more prefried portions are cooked by:
• partially cooking the prefried portions by subjecting them to impingement with hot air having a temperature of at least 150 °C for at least 1 second and less than 20 seconds; and
• fully cooking the partially cooked portions by exposing them for in total 20-600 seconds to infrared radiation, more than 50% of the energy content of said infrared radiation stemming from infrared radiation having a wavelength in the range of 0.7-10 µm.

11. Method according to claim 10, wherein the volume of the prefried portions increases by at least 10%, preferably by at least 12% during the partial cooking.

12. Method according to any one of claims 10 or 11, wherein the temperature within the partially cooked portions increases to at least 95 °C during the exposure to infrared radiation.

13. Method according to any one of the preceding claims, wherein the fully cooked farinaceous food product has a specific volume of 4.5-6.0 ml/g.

14. Method according to any one of the preceding claims, wherein the fully cooked farinaceous product is a doughnut.

## Patentansprüche

1. Verfahren zur Herstellung eines vollständig gekochten mehlhaltigen Nahrungsprodukts, wobei das Verfahren die folgenden aufeinanderfolgenden Schritte aufweist:
A. Herstellen eines mehlhaltigen Knet- oder Rührteigs durch Mischen von Mehl, Wasser, Triebmittel und optional einer oder mehreren Backzutaten;
B. Teilen des Knet- oder Rührteigs in einen oder mehrere Portionen;
C. Vorfrittieren der einen oder der mehreren Portionen, indem diese für 2-40 Sekunden mit heißem Öl, das eine Temperatur von 150-250°C aufweist, in Kontakt gebracht werden;
D. Kochen der einen oder der mehreren vorfrittierten Portionen, indem sie (i) insgesamt mindestens 1 Sekunde und weniger als 20 Sekunden dem Auftreffen von warmer Luft mit einer Temperatur von wenigstens 150°C ausgesetzt werden, und (ii) insgesamt 20-600 Sekunden Infrarotstrahlung ausgesetzt werden, wobei mehr als 50% des Energiegehalts der Infrarotstrahlung von Infrarotstrahlung mit einer Wellenlänge im Bereich von 0,7-10 µm stammt, wobei das Auftreffenlassen von warmer Luft und die Infrarotbestrahlung gleichzeitig, sequentiell oder in beliebigen Kombinationen erfolgen können;
wobei das Vorfrittieren aufweist:
(i) Bringen der gesamten Außenfläche des einen oder der mehreren Portionen in Kontakt mit dem heißen Öl; oder
(ii) Bringen einer Seite des einen oder der mehreren Portionen in Kontakt mit dem heißen Öl, gefolgt von dem Aufbringen von Öl auf den Teil der vorfrittierten Portionen, der nicht in Kontakt mit dem heißen Öl gebracht wurde,
vor dem Kochen der vorfrittierten Portionen.

2. Verfahren nach Anspruch 1, bei welchem das heiße Öl eine Temperatur von 160-230°C aufweist.

3. Verfahren nach Anspruch 1 oder 2, bei welchem die eine oder die mehreren Portionen für mindestens 20 Sekunden in Kontakt mit dem hei0en Öl gebracht werden.

4. Verfahren nach einem der vorhergehenden Ansprüche, bei welchem die vorfrittierten Portionen ein spezifisches Volumen von 3,0-4,5 ml/g aufweisen.

5. Verfahren nach einem der vorhergehenden Ansprüche, bei welchem die vorfrittierten Portionen dem Auftreffen von warmer Luft mit einer Temperatur von 180-340°C, vorzugsweise 200-320°C ausgesetzt werden.

6. Verfahren nach einem der vorhergehenden Ansprüche, bei welchem das Auftreffenlassen von warmer Luft das Beaufschlagen der vorfrittierten Portionen mit warmer Luft aufweist, die eine Geschwindigkeit von mindestens 1 m/s, vorzugsweise 5-20 m/s aufweist.

7. Verfahren nach einem der vorhergehenden Ansprüche, bei welchem die Infrarotstrahlung durch Infrarotröhrenstrahler bereitgestellt wird.

8. Verfahren nach einem der vorhergehenden Ansprüche, bei welchem die Infrarotstrahlung eine Wellenlänge von 0,7-5,0 µm aufweist.

9. Verfahren nach einem der vorhergehenden Ansprüche, bei welchem mindestens 30%, vorzugsweise mindestens 40% der bei dem Verfahren auftretenden Wärmeübertragung durch die Infrarotstrahlung bewirkt wird.

10. Verfahren nach einem der vorhergehenden Ansprüche, bei welchem die eine oder die mehreren vorfrittierten Portionen gekocht werden, indem:
• die ein oder die mehreren vorfrittierten Portionen teilweise gekocht werden, indem sie mindestens 1 Sekunde und weniger als 20 Sekunden dem Auftreffen von warmer Luft mit einer Temperatur von wenigstens 150°C ausgesetzt werden; und
• die teilweise gekochten Portionen vollständig gekocht werden, indem sie insgesamt 20-600 Sekunden Infrarotstrahlung ausgesetzt werden, wobei mehr als 50% des Energiegehalts der Infrarotstrahlung von Infrarotstrahlung mit einer Wellenlänge im Bereich von 0,7-10 µm stammt.

11. Verfahren nach Anspruch 10, bei welchem das Volumen der vorfrittierten Portionen um mindestens 10%, vorzugsweise um mindestens 12% während des teilweisen Kochens zunimmt.

12. Verfahren nach einem der Ansprüche 10 oder 11, bei welchem die Temperatur in den teilweise gekochten Portionen auf mindestens 95°C steigt, während diese der Infrarotstrahlung ausgesetzt sind.

13. Verfahren nach einem der vorhergehenden Ansprüche, bei welchem das vollständig gekochte mehlhaltige Nahrungsprodukt ein spezifisches Volumen von 4,5-6,0 ml/g aufweist.

14. Verfahren nach einem der vorhergehenden Ansprüche, bei welchem das vollständig gekochte mehlhaltige Produkt ein Doughnut ist.

## Revendications

1. Procédé de préparation d'un produit alimentaire farineux entièrement cuit, le procédé comprenant les étapes successives consistant à :
A. préparer une pâte farineuse ou un pâton en mélangeant de la farine, de l'eau, du levain et facultativement un ou plusieurs autres ingrédients de patisserie ;
B. diviser la pâte ou pâton en une ou plusieurs parties ;
C. préfrire ces une ou plusieurs parties par mise en contact de celles-ci pendant 2 à 40 secondes avec de l'huile chaude ayant une température de 150 à 250°C ;
D. cuire ces une ou plusieurs parties préfrites en les exposant (i) pendant un total d'au moins 1 seconde et de moins de 20 secondes à un impact d'air chaud ayant une température d'au moins 150°C, et (ii) pendant un total de 20 à 600 secondes à un rayonnement infrarouge, plus de 50 % du contenu énergétique de ce rayonnement infrarouge résultant d'un rayonnement infrarouge ayant une longueur d'onde dans la plage de 0,7 à 10 µm, l'exposition à l'impact d'air chaud et au rayonnement infrarouge pouvant avoir lieu simultanément, en séquence ou selon toute combinaison ; dans lequel l'action de préfrire consiste à :
(i) mettre en contact la surface extérieure complète des une ou plusieurs parties avec l'huile chaude ; ou
(ii) mettre en contact un côté des une ou plusieurs parties avec l'huile chaude, suivi par l'application d'huile sur la partie des parties préfrites qui n'a pas été en contact avec l'huile chaude ;
avant la cuisson des parties préfrites.

2. Procédé selon la revendication 1, dans lequel l'huile chaude a une température de 160 à 230°C.

3. Procédé selon les revendications 1 ou 2, dans lequel les une ou plusieurs parties sont en contact avec l'huile chaude pendant au moins 20 secondes.

4. Procédé selon l'une quelconque des revendications précédentes, dans lequel les parties préfrites ont un volume spécifique de 3,0 à 4,5 ml/g.

5. Procédé selon l'une quelconque des revendications précédentes, dans lequel les parties préfrites sont exposées à un impact avec de l'air chaud ayant une température de 180 à 340°C, de préférence de 200 à 320°C.

6. Procédé selon l'une quelconque des revendications précédentes, dans lequel l'impact avec de l'air chaud consiste à soumettre les parties préfrites à un impact avec de l'air chaud ayant une vitesse d'au moins 1 m/s, de préférence de 5 à 20 m/s.

7. Procédé selon l'une quelconque des revendications précédentes, dans lequel le rayonnement infrarouge est fourni par des tubes chauffants à infrarouge.

8. Procédé selon l'une quelconque des revendications précédentes, dans lequel le rayonnement infrarouge a une longueur d'onde de 0,7 à 5,0 µm.

9. Procédé selon l'une quelconque des revendications précédentes, dans lequel au moins 30 %, de manière plus préférée au moins 40 % du transfert thermique qui a lieu dans le présent procédé est fourni par le rayonnement infrarouge.

10. Procédé selon l'une quelconque des revendications précédentes, dans lequel les une ou plusieurs parties préfrites sont cuites en :
- cuisant partiellement les parties préfrites en les soumettant à un impact avec de l'air chaud ayant une température d'au moins 150°C pendant au moins une seconde et moins de 20 secondes ; et
- cuisant entièrement les parties partiellement cuites en les exposant pendant un total de 20 à 600 secondes à un rayonnement infrarouge, plus de 50 % de la teneur énergétique du rayonnement infrarouge résultant d'un rayonnement infrarouge ayant une longueur d'onde dans la plage de 0,7 à 10 µm.

11. Procédé selon la revendication 10, dans lequel le volume des parties préfrites augmente d'au moins 10 %, de préférence d'au moins 12 % pendant la cuisson partielle.

12. Procédé selon l'une des revendications 10 ou 11, dans lequel la température dans les parties partiellement cuites augmente jusqu'à au moins 95°C pendant l'exposition au rayonnement infrarouge.

13. Procédé selon l'une quelconque des revendications précédentes, dans lequel le produit alimentaire farineux entièrement cuit a un volume spécifique de 4,5 à 6,0 ml/g.

14. Procédé selon l'une quelconque des revendications précédentes, dans lequel le produit farineux entièrement cuit est un beignet.
